# FASCICULE DE BREVET EUROPEEN

(11) **EP 0 789 491 B1**
(45) Date de publication et mention de la délivrance du brevet: **10.10.2001**
(21) Numéro de dépôt: 97400224.8
(22) Date de dépôt: 31.01.1997
(51) Int. Cl.: H04N 7/088, A63F 13/12

(54) **Système d'interactions entre un serveur et des utilisateurs**
Interaktionssystem zwischen einem Server und Benutzern
Interaction system between a server and users

(30) Priorité: 07.02.1996 FR 9601488
(43) Date de publication de la demande: 13.08.1997
(73) Titulaire: SAGEM SA, 75783 Paris Cédex 16 (FR)
(72) Inventeur: Pradel, Denis, 95480 Pierre Laye (FR)
(74) Mandataire: Bloch, Gérard

(56) Documents cités:
- WO-A-93/10605
- WO-A-94/13102
- WO-A-95/15654
- DE-U- 9 318 786

## Description

Afin, par exemple, de sonder une audience de radio, de télévision ou de tout autre serveur d'informations, ou bien de faire participer l'audience à une émission du serveur, il est intéressant, pour un utilisateur de ce serveur, de disposer de moyens de communication interactive, c'est-à-dire bidirectionnelle et en temps réel, avec le serveur ou un opérateur du serveur.

Le plus souvent, lorsque l'utilisateur du serveur est sollicité au cours d'une émission, pour un sondage ou pour un jeu, à titre d'exemples encore, il retourne sa réponse par téléphone ou par terminal vidéotex, ce qui constitue une barrière à son désir de répondre.

En outre, l'instantanéité du résultat au sondage ou au jeu dépend de la rapidité de l'utilisateur à répondre et du serveur à traiter les réponses.

En médiamétrie, des dispositifs installés sur des postes de télévision ou de radio enregistrent la sélection de l'utilisateur parmi les différentes émissions du serveur. L'enregistrement est ensuite transmis au serveur par téléphone par exemple, ce qui présente également l'inconvénient du différé.

Enfin, en matière de jeux télévisés, des machines à touches sont parfois mises à la disposition des spectateurs pour taper et enregistrer à la machine leurs réponses aux questions d'un jeu posées lors d'une émission. Les réponses enregistrées sont ensuite comparées aux bonnes réponses préalablement stockées dans la machine ou disponibles auprès d'un représentant du serveur. Dans ce cas, le spectateur ne joue pas de manière interactive avec le serveur puisque sa machine fonctionne de façon autonome, comme un appareil enregistreur.

Le document WO-A-93/01605, qui fait partie de l'art antérieur connu, enseigne un système de télévision interactif basé sur des transactions permettant de transmettre des messages destinés à être transmis pendant l'intervalle de retour de trame. Le système permet de jouer à plusieurs jeux, au cours d'une même session de jeu, en passant d'un jeu à l'autre simplement en changeant de programme TV.

La présente invention propose une solution plus satisfaisante sur le plan de l'interactivité entre le serveur et l'utilisateur.

A cet effet, l'invention concerne un système d'interactions entre un serveur et des utilisateurs selon la revendication 1.

Grâce à l'invention, la console d'utilisateur peut être en liaison à la fois avec le serveur, l'utilisateur et la mémoire d'exploitation, et gérer l'ensemble des données ainsi reçues de façon à établir l'interaction.

Dans une forme de réalisation préférée, la présente invention est dotée d'une horloge temps réel de sécurisation.

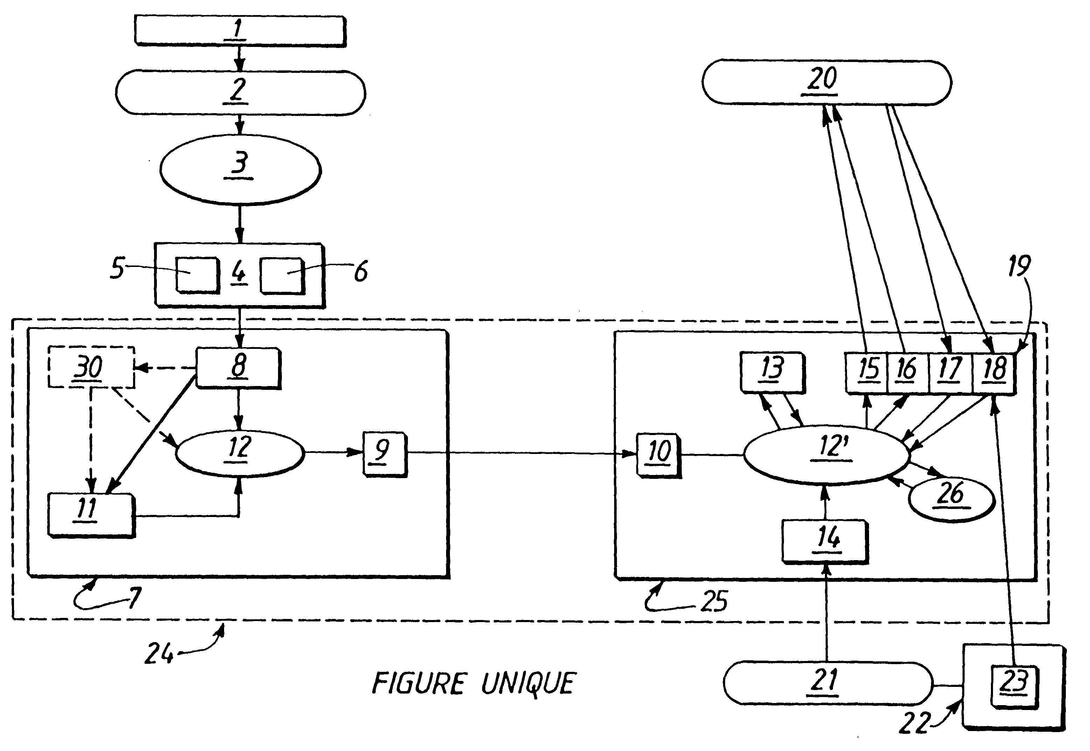

L'invention sera mieux comprise à l'aide de la description suivante, de la forme de réalisation préférée de l'invention, en référence à la figure unique annexée qui représente un schéma bloc fonctionnel du système.

Un serveur 1 comprend des moyens télématiques de transmission de données émises par un organisme public ou privé à des utilisateurs pour consultation, par l'intermédiaire d'un réseau informatique 3. Par serveur, il faut entendre tous moyens d'émission d'informations médiatiques, le plus souvent par voie aérienne (hertzienne), tels que la télévision ou la radio.

L'opérateur 2 du serveur 1, ici un opérateur télématique de télévision , reçoit des données du serveur 1 ici de la chaîne de télévision, afin de les émettre aux différents utilisateurs 20 via le réseau hertzien 3, et de cette façon supervise le système.

Le serveur 1 est associé à un récepteur 4, ici un poste de télévision, relié au réseau 3, pour recevoir des données émises par le serveur 1, et au moyen duquel un utilisateur 20 a accès aux données de la chaîne de télévision.

L'interaction entre l'opérateur 2 et l'utilisateur 20 s'établit à l'aide d'une console d'utilisateur 24 qui comprend deux organes fonctionnels :
- une base 7 de liaison entre l'utilisateur 20 et l'opérateur 2 du serveur 1, comprenant une entrée 8 réceptrice et une sortie 9 émettrice. D'une part, l'entrée 8 est raccordée au réseau 3 par l'intermédiaire du récepteur de serveur 4 auquel elle est reliée par une prise 5, ici de type péritel.
   Le récepteur 4 possède des moyens de modulation des signaux porteurs des données du serveur 1, en l'espèce un tuner de télévision 6. La base 7 pourrait aussi intégrer un tuner propre et être ainsi directement connectée au réseau 3.
   D'autre part, la base 7 est reliée en sortie 9 à un terminal 25, décrit ci-dessous, ici par liaison infrarouge, afin de transmettre au terminal 25 les données du serveur 1. La liaison base-terminal pourrait aussi être hertzienne ou filaire. En outre, la base 7 est dotée d'un microprocesseur de commande 12, et de moyens de réception 11 de données de type vidéotex.
- le terminal 25, en l'espèce portable, est l'élément final de la chaîne de transmission des données du serveur 1 à l'utilisateur 20.

Ce terminal comprend :
- une entrée 10 de réception des données du serveur 1, reliée à la sortie 9 de la base 7, par la liaison infrarouge précédemment évoquée,
- une entrée 14 de lecture des données contenues dans une mémoire d'exploitation, ici une puce électronique 21. Celle-ci est montée sur une carte 22, dite carte à puce, dont au moins une face comprend des pictogrammes 23, dessins figuratifs stylisés, ici représentant un fond de clavier, pouvant être indroduite manuellement dans un logement du terminal 25.

Dans une autre forme de réalisation, il est prévu d'intégrer la puce électronique 21 dans le terminal 25, mais sans carte support ni pictogrammes.
- une sortie 15-16 donnant à l'utilisateur 20 accès aux données transmises ou émises par le terminal, pour consultation. Cette sortie comporte ici un écran 15 et un haut-parleur 16.
- une entrée d'utilisateur 17-18 de saisie des données de l'utilisateur 20, ici un microphone 17 et un clavier 18. Le clavier 18 a une face avant transparente sous laquelle est prévu un logement d'insertion de la carte à puce 22 côté pictogrammes 23 de façon à obtenir un clavier complet dont le fond est modifiable.
- un microprocesseur 12' de commande du terminal 25 associé à une mémoire interne 26 de stockage de données, pour gestion des données. La gestion de données comprend à titre d'exemples :
   - une exécution d'instructions portées par certaines données du serveur 1, de la puce électronique 21 ou de l'utilisateur 20, par exemple l'ouverture d'une fenêtre à l'écran 15 du terminal 25,
   - une mise en accès de données du serveur 1 ou de la puce électronique 21 pour consultation par l'utilisateur 20,
   - une comparaison de données de l'utilisateur 20 et de données du serveur 1, comme par exemple, dans le cadre d'un jeu de questions-réponses, la comparaison entre la réponse de l'utilisateur 20 à une question du serveur 1 et la bonne réponse du serveur 1.

Dans une autre forme de réalisation, on peut également envisager de doter la base 7 de moyens de réception de données transmises par le terminal 25, et le terminal 25 de moyens de transmission de données vers la base 7.

Le terminal 25 est doté ici d'une horloge temps réel de sécurisation 13, réglable à l'aide d'une instruction de l'opérateur 2 du serveur 1, transmise au terminal via le réseau 3, le récepteur 4 et la base 7.

Les données de l'utilisateur 20 saisies par les entrées 17-18 du terminal 25, et horodatées par l'horloge 13, sont enregistrées dans la mémoire interne 26 du terminal 25, notamment pour comparaison par le microprocesseur 12' du terminal 25 avec l'horodate de l'opérateur 2 du serveur 1. La vérification de la cohérence des horodates respectives de l'opérateur 2 et de l'utilisateur 20 permet de sécuriser le système en empêchant par exemple l'utilisateur 20 de différer sa saisie de données par le terminal 25.

Afin de mieux saisir le fonctionnement du système à interactions entre le serveur 1 et l'utilisateur 20, on va décrire à titre d'exemple le déroulement d'un jeu de questions-réponses télévisé. On notera d'emblée que l'application de l'invention ne se limite en aucun cas à l'exemple particulier ici décrit.

Avant le jeu, l'utilisateur 20 doit se procurer, auprès d'un représentant du serveur 1, la console d'utilisateur 24, comprenant la base 7 et le terminal 25, et la carte à puce 22 du jeu, décorée des pictogrammes 23, stylisés pour le jeu et réprésentant le fond de clavier adapté au jeu du serveur 1. Il peut également acheter un montant de crédits de jeu.

Afin de s'apprêter à jouer, l'utilisateur 20 apparie la base 7 et le terminal 25 par liaison infrarouge afin de former la console 24.

Puis il relie la base 7 à son poste de télévision par la prise péritel et introduit la carte à puce 22 dans le terminal 25 sous la face avant transparente du clavier 18 côté pictogrammes 23 afin d'obtenir le clavier du jeu.

En début de jeu, l'opérateur 2 de la chaîne de télévision transmet une instruction, en l'espèce de forme vidéotex, au microprocesseur 12' du terminal 25 via le réseau 3 de la télévision, le poste de télévision 4 et la base 7 afin d'ouvrir une fenêtre du jeu à l'écran 15 du terminal 25. De la même manière, l'opérateur 2 pose une question du jeu télévisé à l'utilisateur 20 qui doit taper sa réponse sur le clavier 18 du terminal 25 en un temps limité. Puis la réponse est enregistrée, avec l'horodate de l'horloge temps réel 13 de l'instant de réponse, dans le mémoire interne 26 du terminal 25. Enfin, l'enregistrement est validé ou refusé par comparaison par le microprocesseur 12' du terminal 25 avec la bonne réponse et l'horodate du serveur 1 transmises au terminal 25.

Le résultat de cette comparaison est accessible à l'utilisateur 20 par la sortie 15-16 du terminal 25 et/ou stockée dans la mémoire interne 26 du terminal 25 et, éventuellement, est converti en gain ou perte de crédits pour l'utilisateur 20.

L'horloge temps réel 13 offre une sécurisation du jeu dans la mesure où elle empêche l'utilisateur 20 de différer sa réponse à l'aide d'un magnétoscope par exemple.

Par mesure de sécurité encore, des moyens de cryptage installés par exemple dans la console d'utilisateur 24 permettraient entre autres d'éviter un excès de gain de crédits.

On vient de décrire une forme de réalisation d'un système d'interactions entre un serveur et des utilisateurs ne permettant qu'un dialogue interactif apparent entre l'opérateur de serveur 2 et l'un des utilisateurs 20. En effet, la transmission de données précédemment décrite s'effectue uniquement dans un sens allant de l'opérateur 2 à l'utilisateur 20.

A ce propos, on pourrait envisager d'inclure un modem 30, représenté en pointillés sur la figure, dans la base 7, alors reliée au réseau de télécommunication commuté, et grâce auquel l'utilisateur 20 pourrait transmettre à l'opérateur de serveur 2 un résultat de jeu, une réponse de sondage ou autres données d'utilisateur. En outre, le modem 30 permettrait un chargement de logiciel de jeu par l'opérateur de serveur 2 dans la console d'utilisateur 24.

## Revendications

1. Système d'interactions entre un serveur (1) et des utilisateurs comprenant un récepteur (4) de données du serveur (1) et une console d'utilisateur (24) comportant une base (7) de liaison entre un opérateur (2) du serveur (1) supervisant le système et un utilisateur (20), la base étant dotée de moyens de réception (8 ; 11) et de transmission (9) des données du serveur (1) et un terminal d'utilisateur (25), le terminal (25) étant pourvu de moyens de réception (10) des données transmises par la base (7), de moyens (15 ; 16) donnant à l'utilisateur (20) un accès à des données, de moyens de saisie (17; 18) de données de l'utilisateur (20), dont un clavier (18), et de moyens de gestion (12'; 26) de données, le système étant **caractérisé par** le fait qu'il comprend une carte de jeu (22) supportant une mémoire d'exploitation (21) et comportant une face (23) comprenant des pictogrammes représentant un fond de clavier, le clavier (18) du terminal possède une face avant transparente sous laquelle est ménagé un logement de réception de la carte de jeu (22), avec sa face (23) représentant un fond de clavier tourné vers la face avant transparente du clavier (18), pour obtenir un clavier complet, et le terminal (25) comprend des moyens (14) de lecture de données contenues dans la mémoire d'exploitation (21).

2. Système selon la revendication 1, dans lequel il est prévu une horloge temps réel (13) de sécurisation.

3. Système selon l'une des revendications 1 et 2, dans lequel la base (7) comporte un modem (30).

## Patentansprüche

1. Interaktives System zwischen einem Server (1) und Anwendern, mit einem Datenempfänger (4) zum Empfangen von Daten vom Server (1) und einer Benutzerkonsole (24) mit einer Verbindungsbasis (7) zur Verbindung zwischen einem Bediener (2) des Servers (1), der das System überwacht, und einem Anwender (20), wobei die Basis mit Mitteln zum Empfangen (8; 11) und Übermitteln (9) von Daten vom Server (1) und einem Anwenderendgerät (25) ausgestattet ist, wobei das Endgerät (25) mit Mitteln zum Empfangen (10) der durch die Basis (7) übermittelten Daten, Mitteln (15; 16) die dem Anwender (20) Zutritt zu den Daten geben, Mitteln (17 ; 18) zum Erfassen: von Daten des Anwenders (20), darunter eine Tastatur (18), und Mitteln zur Verwaltung (12'; 26) von Daten versehen ist, wobei das System **dadurch gekennzeichnet ist, dass** es eine Spielkarte (22) umfasst, die einen Arbeitspeicher (21) unterstützt und eine Seite (23) mit Piktogrammen hat, die einen Tastaturhintergrund darstellen, wobei die Tastatur (18) des Endgeräts eine transparente Vorderseite hat, unter der ein Einschub für die Spielkarte (22) angeordnet ist, wobei deren Seite (23), die einen Tastaturhintergrund darstellt, zur transparenten Vorderseite der Tastatur (18) hin gewandt ist, um eine vollständige Tastatur zu erhalten, und das Endgerät (25) Mittel (14) zum Auslesen der im Arbeitsspeicher (21) enthaltenen Daten umfasst.

2. System nach Anspruch 1, bei dem eine Echtzeituhr (13) zur Sicherung vorgesehen ist.

3. System nach einem der Ansprüche 1 und 2, bei dem die Basis (7) ein Modem (30) umfasst.

## Claims

1. Interaction system between a server (1) and users, comprising a receiver (4) for data from the server (1) and a user console (24) comprising a base (7) for connecting an operator (2) of the server (1) supervising the system and a user (20), the base having facilities for receiving (8; 11) and transmitting (9) data from the server (1) and a user terminal (25), the terminal (25) being provided with means (10) of receiving data transmitted by the base (7), means (15;16) giving the user (20) access to data, means of collecting (17; 18) data from the user (20), including a keyboard (18), and data handling : means (12; 26), the system being **characterised by** the fact that it includes a game card (22) supporting an operating memory (21) and with a face (23) containing pictograms representing a keyboard base, the keyboard (18) of the terminal has a transparent front face under which is arranged a housing for receiving the game card (22), with its face (23) representing a keyboard base turned towards the transparent front face of the keyboard (18) to make a complete keyboard, and the terminal (25) has means (14) for reading data contained in the operating memory (21).

2. System according to Claim 1 in which a security real time clock (13) is provided.

3. System according to one of the Claims 1 and 2, in which the base (7) contains a modem (30).
